# EUROPEAN PATENT APPLICATION

(11) **EP 4 748 540 A2**
(43) Date of publication of application: **27.05.2026**
(21) Application number: 26163373.9
(22) Date of filing: 22.03.2024
(51) Int. Cl.: B25J 11/00

(54) **SECURITY ROBOT AND SYSTEM AND METHOD FOR MANAGING ROBOTS AND FUNCTIONS THEREOF**

(30) Priority: 24.03.2023 US 202363492052 P
(62) Divisional of application: 24717555.7
(71) Applicant: DEKA Products Limited Partnership, Manchester, NH 03101 (US)
(72) Inventor: KAMEN, Dean, Bedford, 03110 (US); MANNE, Sai Sravan, Manchester, 03104 (US); KERWIN, John M, Manchester, 03104 (US); BIDAULT, Boris V.P., Manchester, 03104 (US); HERSH, Benjamin V, Raymond, 03077 (US); AMES, Edward H, Lowell, 01851 (US); LI, Qingtian, Derry, 03038 (US); BHATIA, Rishabh, Manchester, 03101 (US)
(74) Representative: EIP

(57) **Abstract**

Disclosed is a method of controlling a robot. The method comprises: selecting a point and/or a route; and invoking a control, thereby enabling transmitting instructions to which a robot may respond by traveling to the point and/or along the route.

## Description

### CROSS REFERENCE TO RELATED APPLICATION(S)

This Application claims the benefit of U.S. Provisional Application Serial No. 63/492,052 filed on March 24, 2023.

### FIELD OF THE INVENTION

This application generally relates to robots, and more specifically to security robots having functionalities that are only available to security authorities that can obtain control of the robot and functionalities thereof.

### BACKGROUND

Security is an important component of private and public life with complicated constraints and consequences. Private consumers may have resources for human or mechanized surveillance that nevertheless proves ineffective for lack of actual or perceived capacity to address adverse situations or manage conflict. For example, a private security guard may encounter a bad actor committing a bad act but lack legal rights and/or tools, such as a weapon, to arrest the act or actor. Knowing this, the actor may disregard security personnel entreaties or even select private targets because of this apparent low risk. Private security consumers would like to at least appear more capable of countering unwanted encroachments.

Society does not discourage private property owners from employing self-help and actively dealing with trespassers or unauthorized availment to property. However, lacking training and experience often leads to exercising poor judgment and/or performance with undesired results. Private security consumers do not want the burden of training or the liability of failing their duty of care owed even to trespassers.

Public security organizations, such as municipal police departments, may possess many of the legal rights and tools for managing unwanted and unlawful activities but, being limited in number, may not respond timely with recovery prospects diminishing with time. Police also encounter public backlash when they make mistakes or are perceived as exercising their powers carelessly, particularly in minor situations that escalate with unfortunate consequences. Public security providers would like to timely engage in appropriate situations.

Policing authorities commonly use technology and robots to supplement their duties, ranging from surveillance to engaging and even exercising lethal force over criminal suspects. While the extent of power that a robot should wield is community dependent, the increased effective presence that robots afford has been shown to improve public safety. However, the cost of this technology, particularly in smaller and more rural municipalities, inhibits employment of robots where they might be most cost effective, such as geographically expansive regions with few officers able to respond rapidly. Public security providers would like to employ resources that would expand their zone of effectiveness.

Historically, police agencies have deputized private citizens and endowed them with limited powers to carry out limited policing activities, such as enlisting available citizens to apprehend suspects in numbers beyond the capacity of police officers responding to a situation. The invention embraces such situations where, lacking citizens, officers "deputize" available robots to assist with performing their duties.

What is needed is a security robot over which control by a first party may be ceded to a second party having authority to exercise power and concomitant instrumentalities not available to or authorized for the first party.

### SUMMARY OF THE INVENTION

The invention overcomes the inabilities of existing technology and satisfies private and public security needs and wants with a robot that operates autonomously or by remote control that a first party can cede to a second party having authority to exercise power and concomitant instrumentalities not available to or authorized for the first party.

Some embodiments of the invention provide a robot having a compartment for storing dangerous instrumentalities to which access and control is limited to privileges that may be made available to qualified agents.

Other embodiments of the invention provide methods for establishing and passing control of a robot, and establishing privileges for accessing and employing certain functions thereof.

The details of one or more embodiments are set forth in the accompanying drawings and the description below. Other features and advantages will become apparent from the description, the drawings, and the claims.

### BRIEF DESCRIPTION OF THE DRAWINGS

Fig. 1 is a schematic view of an embodiment of a system for managing a security robot configured according to principles of the invention;
Figs. 2 and 3 are schematic views of an embodiment of a security robot configured according to principles of the invention;
Figs. 4-7, 13, 15 and 17 are flow diagrams of embodiments of methods of managing a security robot configured according to principles of the invention;
Figs. 8-12 and 14 are graphical images of embodiments of user interfaces configured according to principles of the invention; and
Fig. 16 is a front view of a communication device configured according to principles of the invention.

Like reference symbols in the various drawings indicate like elements.

### DETAILED DESCRIPTION OF THE PREFERRED EMBODIMENTS

The examples shown in drawings are presented to demonstrate examples of the disclosure. The drawings are illustrative and non-limiting. In the drawings, for illustrative purposes, the size of some of the elements may be exaggerated and not drawn to a particular scale. Additionally, elements shown within the drawings that have the same numbers may be identical elements or may be similar elements, depending on the context.

Where the term "comprising" is used in the present description and claims, it does not exclude other elements or steps. Where an indefinite or definite article is used when referring to a singular noun, e.g., "a", "an", or "the", this includes a plural of that noun unless something otherwise is specifically stated. Hence, the term "comprising" should not be interpreted as being restricted to the items listed thereafter; it does not exclude other elements or steps, and so the scope of the expression "a device comprising items A and B" should not be limited to devices consisting only of components A and B. Furthermore, to the extent that the terms "includes", "has", "possesses", and the like are used in the present description and claims, such terms are intended to be inclusive in a manner similar to the term "comprising," as "comprising" is interpreted when employed as a transitional word in a claim.

Furthermore, the terms "first", "second", "third", and the like, whether used in the description or in the claims, are provided to distinguish between similar elements and not necessarily to describe a sequential or chronological order. It is to be understood that the terms so used are interchangeable under appropriate circumstances (unless clearly disclosed otherwise) and that the aspects of the disclosure described herein are capable of operation in other sequences and/or arrangements than are described or illustrated herein.

In the following description, numerous specific details are set forth to provide a thorough understanding of various aspects and arrangements. It will be recognized, however, that the techniques described herein can be practiced without one or more of the specific details, or with other methods, components, materials, etc. In other instances, well known structures, materials, or operations may not be shown or described in detail to avoid obscuring certain aspects.

Reference throughout this specification to "an aspect," "an arrangement," "a configuration," or "an example" indicates that a particular feature, structure, or characteristic is described. Thus, appearances of phrases such as "in one aspect," "in one arrangement," "in a configuration," "in some examples," or the like in various places throughout this specification do not necessarily each refer to the same aspect, feature, configuration, example, or arrangement. Furthermore, the particular features, structures, and/or characteristics described may be combined in any suitable manner.

To the extent used in the present disclosure and claims, the terms "component," "system," "platform," "layer," "selector," "interface," and the like are intended to refer to a computer-related entity or an entity related to an operational apparatus with one or more specific functionalities, wherein the entity may be either hardware, a combination of hardware and software, software, or software in execution. As an example, a component may be, but is not limited to being, a process running on a processor, a processor, an object, an executable, a thread of execution, a program, and/or a computer. By way of illustration and not limitation, both an application running on a server and the server itself can be a component. One or more components may reside within a process and/or thread of execution and a component may be localized on one computer and/or distributed between two or more computers. In addition, components may execute from various computer-readable media, device-readable storage devices, or machine-readable media having various data structures stored thereon. The components may communicate via local and/or remote processes such as in accordance with a signal having one or more data packets (e.g., data from one component interacting with another component in a local system, a distributed system, and/or across a network such as the Internet with other systems via the signal). As another example, a component can be an apparatus with specific functionality provided by mechanical parts operated by electric or electronic circuitry, which may be operated by a software or firmware application executed by a processor, wherein the processor can be internal or external to the apparatus and executes at least a part of the software or firmware application. As yet another example, a component can be an apparatus that provides specific functionality through electronic components without mechanical parts; the electronic components can include a processor therein to execute software or firmware that confers at least in part the functionality of the electronic components.

To the extent used in the subject specification, terms such as "store," "storage," "data store," data storage," "database," and the like refer to memory components, entities embodied in a memory, or components comprising a memory. It will be appreciated that the memory components described herein can be either volatile memory or nonvolatile memory, or can include both volatile and nonvolatile memory.

In addition, the term "or" is intended to mean an inclusive "or" rather than an exclusive "or." That is, unless specified otherwise, or clear from context, "X employs A or B" is intended to mean any of the natural inclusive permutations. That is, if X employs A, X employs B, or X employs both A and B, then "X employs A or B" is satisfied under any of the foregoing instances. Moreover, articles "a" and "an" as used in the subject disclosure and claims should generally be construed to mean "one or more" unless specified otherwise or clear from context to be directed to a singular form.

The words "exemplary" and/or "demonstrative," to the extent used herein, mean serving as an example, instance, or illustration. For the avoidance of doubt, the subject matter disclosed herein is not limited by disclosed examples. In addition, any aspect or design described herein as "exemplary" and/or "demonstrative" is not necessarily to be construed as preferred or advantageous over other aspects or designs, nor is it meant to preclude equivalent exemplary structures and techniques. Furthermore, to the extent that the terms "includes," "has," "contains," and other similar words are used in either the detailed description or the claims, such terms are intended to be inclusive, in a manner similar to the term "comprising" as an open transition word, without precluding any additional or other elements.

**As** used herein, the term "infer" or "inference" refers generally to the process of reasoning about, or inferring states of, the system, environment, user, and/or intent from a set of observations as captured via events and/or data. Captured data and events can include user data, device data, environment data, data from sensors, application data, implicit data, explicit data, etc. Inference can be employed to identify a specific context or action or can generate a probability distribution over states of interest based on a consideration of data and events, for example.

The disclosed subject matter can be implemented as a method, apparatus, or article of manufacture using standard programming and/or engineering techniques to produce software, firmware, hardware, or any combination thereof to control a computer to implement the disclosed subject matter. The term "article of manufacture," to the extent used herein, is intended to encompass a computer program accessible from any computer-readable device, machine-readable device, computer-readable carrier, computer-readable media, or machine-readable media. For example, computer-readable media can include, but are not limited to, a magnetic storage device, e.g., hard disk; floppy disk; magnetic strip(s); an optical disk (e.g., compact disk (CD), digital video disc (DVD), Blu-ray Disc (BD)); a smart card; a flash memory device (e.g., card, stick, key drive); a virtual device that emulates a storage device; and/or any combination of the above computer-readable media.

Generally, program modules include routines, programs, components, data structures, etc., that perform particular tasks or implement particular abstract data types. The illustrated aspects of the subject disclosure may be practiced in distributed computing environments where certain tasks are performed by remote processing devices that are linked through a communications network. In a distributed computing environment, program modules can be located in both local and remote memory storage devices.

Computing devices can include at least computer-readable storage media, machine-readable storage media, and/or communications media. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data, or unstructured data.

Computer-readable storage media can include, but are not limited to, random access memory (RAM), read only memory (ROM), electrically erasable programmable read only memory (EEPROM), flash memory or other memory technology, compact disk read only memory (CD ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media that can be used to store desired information. In this regard, the terms "tangible" or "non-transitory" herein as applied to storage, memory, or computer-readable media, are to be understood to exclude only propagating transitory signals per se as modifiers, and do not exclude any standard storage, memory, or computer-readable media that are not only propagating transitory signals per se.

Computer-readable storage media can be accessed by one or more local or remote computing devices, e.g., via access requests, queries, or other data retrieval protocols, for a variety of operations with respect to the information stored by the medium.

A system bus, as may be used herein, can be any of several types of bus structure that can further interconnect to a memory bus (with or without a memory controller), a peripheral bus, and a local bus using any of a variety of commercially available bus architectures. A database, as may be used herein, can include basic input/output system (BIOS) that can be stored in a nonvolatile memory such as ROM, EPROM, or EEPROM, with BIOS containing the basic routines that help to transfer information between elements within a computer, such as during startup. RAM can also include a high-speed RAM such as static RAM for caching data.

As used herein, a computer can operate in a networked environment using logical connections via wired and/or wireless communications to one or more remote computers. The remote computer(s) can be a workstation, server, router, personal computer, portable computer, microprocessor-based entertainment appliance, peer device, or other common network node. Logical connections depicted herein may include wired/wireless connectivity to a local area network (LAN) and/or larger networks, e.g., a wide area network (WAN). Such LAN and WAN networking environments are commonplace in offices and companies, and facilitate enterprisewide computer networks, such as intranets, any of which can connect to a global communications network, e.g., the Internet.

When used in a LAN networking environment, a computer can be connected to the LAN through a wired and/or wireless communication network interface or adapter. The adapter can facilitate wired or wireless communication to the LAN, which can also include a wireless access point (AP) disposed thereon for communicating with the adapter in a wireless mode.

When used in a WAN networking environment, a computer can include a modem or can be connected to a communications server on the WAN via other means for establishing communications over the WAN, such as by way of the Internet. The modem, which can be internal or external, and a wired or wireless device, can be connected to a system bus via an input device interface. In a networked environment, program modules depicted herein relative to a computer or portions thereof can be stored in a remote memory/storage device.

When used in either a LAN or WAN networking environment, a computer can access cloud storage systems or other network-based storage systems in addition to, or in place of, external storage devices. Generally, a connection between a computer and a cloud storage system can be established over a LAN or a WAN, e.g., via an adapter or a modem, respectively. Upon connecting a computer to an associated cloud storage system, an external storage interface can, with the aid of the adapter and/or modem, manage storage provided by the cloud storage system as it would other types of external storage. For instance, the external storage interface can be configured to provide access to cloud storage sources as if those sources were physically connected to the computer.

As employed in the subject specification, the term "processor" can refer to substantially any computing processing unit or device comprising, but not limited to comprising, single-core processors; single-core processors with software multithread execution capability; multi-core processors; multi-core processors with software multithread execution capability; multi-core processors with hardware multithread technology; vector processors; pipeline processors; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a state machine, a discrete gate or transistor logic, discrete hardware components, or any combination thereof designed to perform the functions described herein. Processors can exploit nano-scale architectures such as, but not limited to, molecular and quantum-dot based transistors, switches, and gates, in order to optimize space usage or enhance performance of user equipment. A processor may also be implemented as a combination of computing processing units. For example, a processor may be implemented as one or more processors together, tightly coupled, loosely coupled, or remotely located from each other. Multiple processing chips or multiple devices may share the performance of one or more functions described herein, and similarly, storage may be effected across a plurality of devices. A processor may be implemented to reside in a cloud-based network such as, e.g., the Internet.

The actions of a method or algorithm described in connection with the arrangements disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other known form of storage medium. A storage medium may be coupled to the processor such that the processor can read information from, and write information to, the storage medium. In the alternative, the storage medium may be integral to the processor. The processor and the storage medium may reside in an ASIC. The ASIC may reside in functional equipment such as, e.g., a computer, a robot, a user terminal, a mobile telephone or tablet, a car, or an IP camera. In the alternative, the processor and the storage medium may reside as discrete components in such functional equipment. Additionally, or alternatively, at least one of the processor and/or the storage medium may reside in a cloud-based network such as, e.g., the Internet.

Configurations of the present teachings are directed to computer systems for accomplishing the methods discussed in the description herein, and to computer readable media containing programs for accomplishing these methods. The raw data and results can be stored for future retrieval and processing, printed, displayed, transferred to another computer, and/or transferred elsewhere. Communications links can be wired or wireless, for example, using cellular communication systems, military communications systems, and satellite communications systems. Parts of the system can operate on a computer having a variable number of CPUs. Other alternative computer platforms can be used.

The present configuration is also directed to software/firmware/hardware for accomplishing the methods discussed herein, and computer readable media storing software for accomplishing these methods. The various modules described herein can be accomplished on the same CPU, or can be accomplished on different CPUs. In compliance with the statute, the present configuration has been described in language more or less specific as to structural and methodical features. It is to be understood, however, that the present configuration is not limited to the specific features shown and described, since the means herein disclosed comprise preferred forms of putting the present configuration into effect.

Methods can be, in whole or in part, implemented electronically. Signals representing actions taken by elements of the system and other disclosed configurations can travel over at least one live communications network. Control and data information can be electronically executed and stored on at least one computer-readable medium. The system can be implemented to execute on at least one computer node in at least one live communications network. Common forms of at least one computer-readable medium can include, for example, but not be limited to, a floppy disk, a flexible disk, a hard disk, magnetic tape, or any other magnetic medium, a compact disk read only memory or any other optical medium, punched cards, paper tape, or any other physical medium with patterns of holes, a random access memory, a programmable read only memory, and erasable programmable read only memory (EPROM), a Flash EPROM, or any other memory chip or cartridge, or any other medium from which a computer can read. Further, the at least one computer readable medium can contain graphs in any form, subject to appropriate licenses where necessary, including, but not limited to, Graphic Interchange Format (GIF), Joint Photographic Experts Group (JPEG), Portable Network Graphics (PNG), Scalable Vector Graphics (SVG), and Tagged Image File Format (TIFF).

Various arrangements are described herein. For simplicity of explanation, the methods or algorithms are depicted and described as a series of steps or actions. It is to be understood and appreciated that the various arrangements are not limited by the actions illustrated and/or by the order of actions. For example, actions can occur in various orders and/or concurrently, and with other actions not presented or described herein. Furthermore, not all illustrated actions may be required to implement the methods. In addition, the methods could alternatively be represented as a series of interrelated states via a state diagram or events. Additionally, the methods described hereafter are capable of being stored on an article of manufacture, as defined herein, to facilitate transporting and transferring such methodologies to computers.

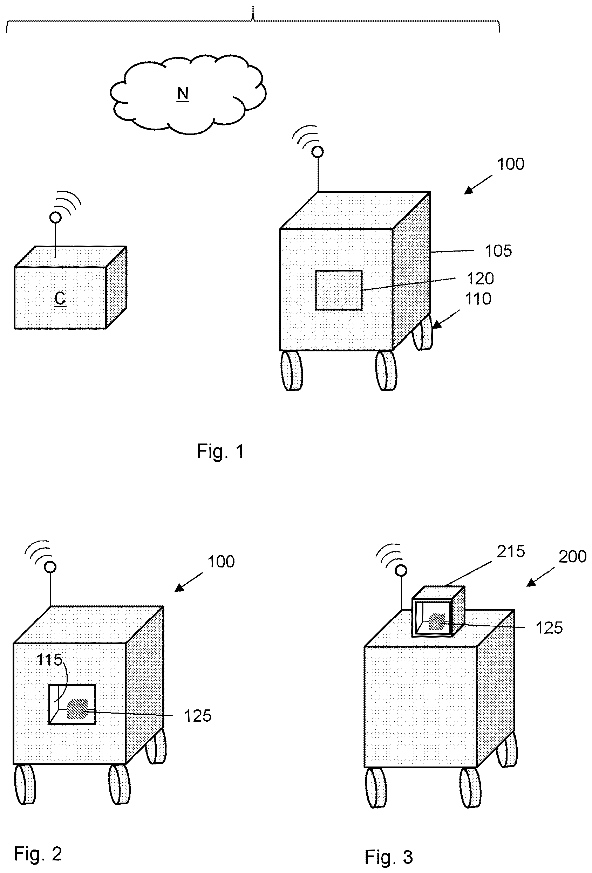

Referring to Fig. 1, the invention is a surveillance robot 100 over which control is transferable, and access to dangerous instrumentalities thereof limited by privileges. The robot has a body 105 that includes or is mounted on motive means 110, such as wheels, for moving the robot 100 about a terrain. Preferably, robot 100 includes a first controller (not shown) that enables communications between cloud-based services, remote computer services that are accessible via the global computer network N known as the internet, and a second controller (not shown) that manages operations of robot 100. Preferably, the second controller receives data from various sensors deployed in and about the robot 100 and, responsive to data and instructions from the first controller, enables and/or instructs components and functions of robot 100 to operate accordingly.

Referring also to Fig. 2, robot 100 includes a hold 115 with a closure 120 configured for securing one or more instrumentality 125. Hold 115 and closure 120 are configured for restrict access to the instrumentalities 125, for example, from forcible entry.

In operation, preferably, a consumer (not shown) employs a computer C for selecting, requesting and acquiring control over a robot via one or more applications that execute in the cloud N. Responsive to a consumer request, an application locates robot 100 that meets the consumer's criteria and then manages association of control thereover, and the same or another application manages allocation of appropriate privileges respecting functions thereof. Responsive to consumer's request for or selection of a robot, an application may alert or engage an owner or proprietor of the robot for negotiating terms for leasing or selling rights to control the robot before the consumer exercises control over the robot. Alternatively, particularly with government entities where time is of the essence, such may be prearranged by contract.

Preferably, control of the robot, specifically, certain functions thereof, are limited according to privileges. Privileges may be associated with exclusive or enhanced levels of controls. For example, a first tier privilege may be associated with a first tier control, such as the ability to instruct the robot to move according to a joy stick. A second tier privilege may include the first tier control and an ability to access a camera for remote surveillance. A special privilege or set of privileges may be exclusive for accessing and exerting control over the dangerous instrumentalities and/or containment thereof.

Preferably, robots and consumers' or users' rights to control and/or assume liability for them are recorded in a database maintained in the cloud N that may be accessed at least by public security authorities and their agents. Preferably, the database includes pose or location data for each registered robot with which authorities may locate a robot proximate to where it may be wanted. Preferably, the database includes data respecting functional capabilities of the robot, such as the ability to provide live audio-visual footage, onboard instrumentalities to which access may be limited by privileges, and the identities of the privileges needed to obtain access to the onboard instrumentalities.

Instrumentalities 125 extend to at least what law enforcement customarily employs in the enforcement of laws and maintaining public safety, not limited to: a Taser; a flash bomb; a tear gas canister and launcher; a gun and rounds of ammunition; an ink packet and mechanism for disbursement thereof.

Referring to Fig. 3, another embodiment of the invention provides a robot 200 with a compartment 215, having a closure (not shown), that is integral with or mountable on robot 200. Detachability of compartment 215 allows for, e.g. *in situ* replacement or substitution of an instrumentality 125 without exposing the instrumentality 125 to potential unauthorized use.

One embodiment of the invention provides for establishing and transferring control of a robot. Another embodiment of the invention provides for associating privileges to functions of the robot, such as access to and use of instrumentalities, based on the owner. While independent, the two embodiments are related in that only certain parties may be entitled to privileges to the instrumentalities. Accordingly, an embodiment of the invention provides for alerting or applying supervisory controls by another party, such as a judicial overseer, upon passing or requesting passing control to a party to which such privileges may be available.

One embodiment of the invention provides for seeking or obtaining authorization or warrants, for example from a judge, before privileges to the instrumentalities are granted.

One embodiment of the invention provides for encrypting communications related to requesting and/or exercising control over the robot, and/or obtaining and verifying privileges related to the instrumentalities.

One embodiment of the invention provides for recording, for example with audio-visual capture, the circumstances or environment of a robot at least upon the occurrence of a request for privileges to the instrumentalities, and continuing until such privileges terminate. Footage from such capture may be diverted to official or third-party storage as appropriate for maintaining credibility of the footage.

Various methods configured according to principles of the invention provide for transferring control of a robot to another party who may be entitled to privileges respecting the instrumentalities, and then securing those privileges. The invention embraces managing the methods and steps thereof through services performed by programs or applications configured for executing in the cloud N and/or in the first controller (not shown), as appropriate, in any embodiments of the security robot described herein. Different scenarios call for different methods with steps that invoke different protocols.

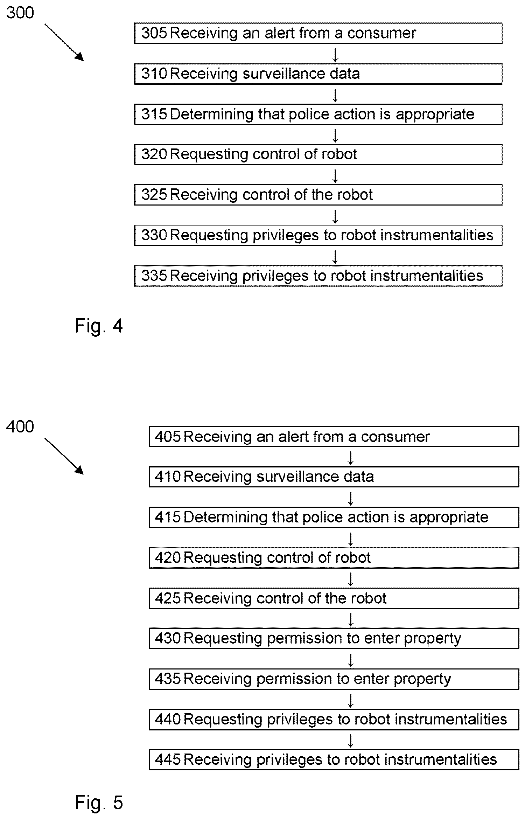

Referring to Fig. 4, one scenario is where a robot under the control of a private consumer (private robot) encounters a situation on the consumer's property for which the consumer desires public safety services. For this scenario, an embodiment of the invention provides a method 300 not limited to the steps of a security authority: 320 requesting control of a robot; 325 receiving control of the robot; 330 requesting instrumentality privileges; and 335 receiving instrumentality privileges. Preferably, interposed between steps 320 and 325 is a step comparable to 1015 of evaluating the requester's privileges or authority to exercise control over the robot, as described below. Without addressing formal requirements for qualifying an effective control request, step 320 should be understood as providing sufficient notice to one possessing rights to control a robot of the requester's interest in having the rights holder temporarily assign those rights to the requester. Method 300 may include a step (not shown) of recording the instance or content of these steps.

Without addressing formal requirements for qualifying an effective control receipt, step 325 should be understood as being effective and providing sufficient notice to the requester of having been given the requested rights. Method 300 may include a step (not shown) of notifying the owner or previous controller of the rights of the transfer of rights. Method 300 may include a step (not shown) of recording the instance or content of this step.

Without addressing formal requirements for qualifying an effective privilege request, step 330 should be understood as providing sufficient notice to one having the requisite authority of the privileges sought and needed to satisfy the request. While the details of step 330 and ordering or necessity thereof within method 300 are beyond the scope of the invention, the invention embraces the potential requirement for such step to happen before such privileges can be conferred. Method 300 may include a step (not shown) of notifying the owner or previous controller of the rights of the transfer of rights. Method 300 may include a step (not shown) of recording the instance or content of this step.

Without addressing formal requirements for qualifying an effective privilege receipt, step 335 should be understood as being effective and providing sufficient notice to the requester of having been given the requested privileges. The method may include a step (not shown) of recording the instance or content of this step.

In this scenario, step 320 is likely to be preceded by a step 305 of the security authority receiving an alert from a consumer that controls the robot as to a situation on the consumer's property for which the consumer desires public safety services. Without addressing formal requirements for qualifying an effective alert, step 305 should be understood as providing sufficient notice to the security authority of the safety concern. The method presumes that permission to enter onto the property is inherent in step 305 but does not exclude additional steps of requesting permission to enter the property and receiving permission to enter the property where appropriate in the scenario. Method 300 may include a step (not shown) of recording the instance or content of these steps.

Interposed between steps 305 and 320 may be a step 310 of receiving surveillance data, such as audio-visual feed, from the consumer. Such data may aid in the executing of step 315 below. Step 310 may be preceded by a step (not shown) of a security authority requesting surveillance data. Method 300 may include a step (not shown) of recording the instance or content of these steps.

Preferably, steps 305, 310, 320 and 325 occur via a secure program or application configured for executing in the cloud N, as described below. As to steps 330 and 335, the invention recognizes that communications and transactions among public officials, including police and judicial officers, may occur through diverse media and pursuant to proscribed protocols that may not be suited to integration with other steps of method 300. Nevertheless, the invention embraces achieving steps 330 and 335 via a separate secure program or application configured for executing in the cloud N.

In this scenario, step 320 is likely to be preceded by a step 315 of determining that police action is appropriate. While the details of step 315 and ordering thereof within method 300 are beyond the scope of the invention, the invention embraces the historical necessity for such step to happen before police action can occur. Method 300 may include a step (not shown) of recording the instance or content of this step.

Referring to Fig. 5, another scenario is where a private robot observes a situation that is not on the consumer's property and that could be appropriate for public safety services. For this scenario, an embodiment of the invention provides a method 400 not limited to the steps of a security authority: 420 requesting control of a robot; 425 receiving control of the robot; 430 requesting permission to enter property; 435 receiving permission to enter property; 440 requesting instrumentality privileges; and 445 receiving instrumentality privileges. Steps 420, 425, 440 and 445 are comparable to respective steps 320, 325, 330 and 335 above. Preferably, interposed between steps 420 and 425 is a step comparable to 1015 of evaluating the requester's privileges or authority to exercise control over the robot, as described below. Without addressing formal requirements for qualifying an effective request to enter property, step 430 should be understood as providing sufficient notice to one possessing rights to the property of the requester's interest in obtaining sufficient rights to enter the property. Method 400 may include a step (not shown) of recording the instance or content of any of these steps.

Without addressing formal requirements for qualifying an effective receipt of permission to enter property, step 435 should be understood as being effective and providing sufficient notice to the requester of having been given the requested permission. Method 400 may include a step (not shown) of recording the instance or content of this step.

Step 420 may be preceded by a step 405 of receiving an alert from a consumer that controls a robot. Step 405 is comparable to step 305 above. Method 400 may include a step (not shown) of recording the instance or content of this step.

Interposed between steps 405 and 420 may be a step 410 of receiving surveillance data, such as audio-visual feed, from the consumer. Step 410 may be preceded by a step (not shown) of a security authority requesting surveillance data. Steps 405, 410 and 420 are comparable to respective steps 305, 310 and 320 above. Method 400 may include a step (not shown) of recording the instance or content of these steps.

Before step 420 may be a step 415 of determining that police action is appropriate. Step 415 is comparable to step 315 above. Method 400 may include a step (not shown) of recording the instance or content of this step.

Another scenario is where a private robot observes a situation that is on public property and could be appropriate for public safety services. For this scenario, the invention relies on method 300 above but without the inherent permission of a private property owner to enter onto the property.

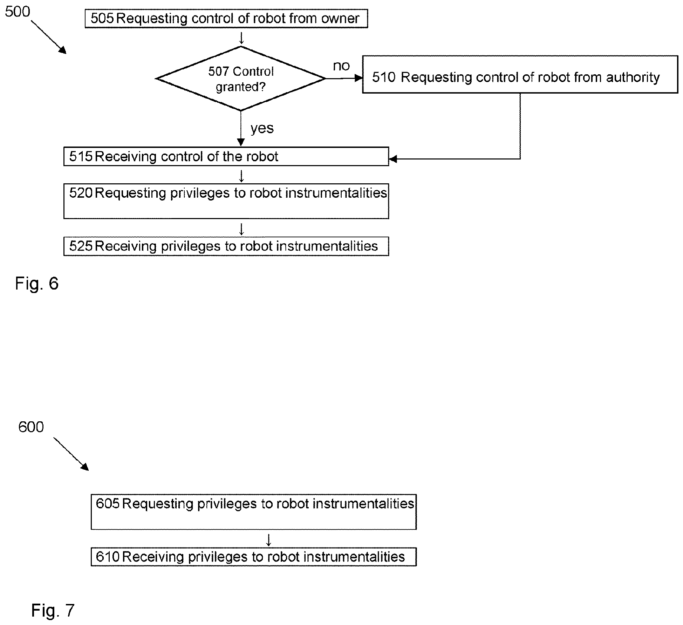

Referring to Fig. 6, another scenario is where public safety services want to enlist a private robot for a situation noticed on private property. For this scenario, an embodiment of the invention provides a method 500 not limited to the steps of a security authority: 505 requesting control of a robot; 515 receiving control of the robot; 520 requesting instrumentality privileges; and 525 receiving instrumentality privileges. Method 500 presumes the existence of permission to enter onto the property but does not exclude additional steps of requesting permission to enter the property from the property owner or governing authority, and receiving permission to enter the property where appropriate in the scenario. Absent preexisting obligations, if step 505 is unsuccessful, then method 500 provides a step 507 for redirecting the flow of method 500 to a step 510 of requesting control of the robot from an authority, such as a court. Steps 505, 515, 520 and 525 are comparable to steps 320, 325, 330 and 335 above. Preferably, interposed between steps 520 and 525 is a step comparable to 1015 of evaluating the requester's privileges or authority to exercise control over the robot, as described below. Method 500 may include a step (not shown) of recording the instance or content of these steps.

Step 507 may occur upon an owner's explicit refusal or absence of a response. The invention recognizes that necessary communications and transactions among public officials, including police and judicial officers, may occur through diverse media and pursuant to proscribed protocols that may not be suited to integration with other steps of method 500. Nevertheless, the invention embraces achieving steps 510 via a separate secure program or application configured for executing in the cloud N.

Another scenario is where public safety services want to enlist a private robot for a situation on public property. For this scenario, the invention relies on method 500 but without implicit permission to enter onto the property.

In the foregoing scenarios, control of a robot and privileges respecting functions thereof should be time limited. Accordingly, each of the foregoing methods may include terminating privileges to the instrumentalities followed by returning control of the robot to the rightful controller.

Referring to Fig. 7, another scenario is where a robot under the control of a public security authority (public robot) notices a situation on public property appropriate for public safety services. For this scenario, an embodiment of the invention provides a method 600 not limited to the steps of a security authority: 605 requesting instrumentality privileges; and 610 receiving instrumentality privileges. Steps 605 and 610 are comparable to respective steps 330 and 335 above. Preferably, interposed between steps 620 and 625 is a step comparable to 1015 of evaluating the requester's privileges or authority to exercise control over the robot, as described below. Method 600 may include a step (not shown) of recording the instance or content of these steps.

Another scenario is where a public robot notices a situation on private property appropriate for public safety services. For this scenario, the invention relies on method 600 assuming the existence of permission to enter onto the property but does not exclude additional steps of requesting permission to enter the property from the property owner or governing authority, and receiving permission to enter the property where appropriate in the scenario. Method 600 may include a step (not shown) of recording the instance or content of these steps.

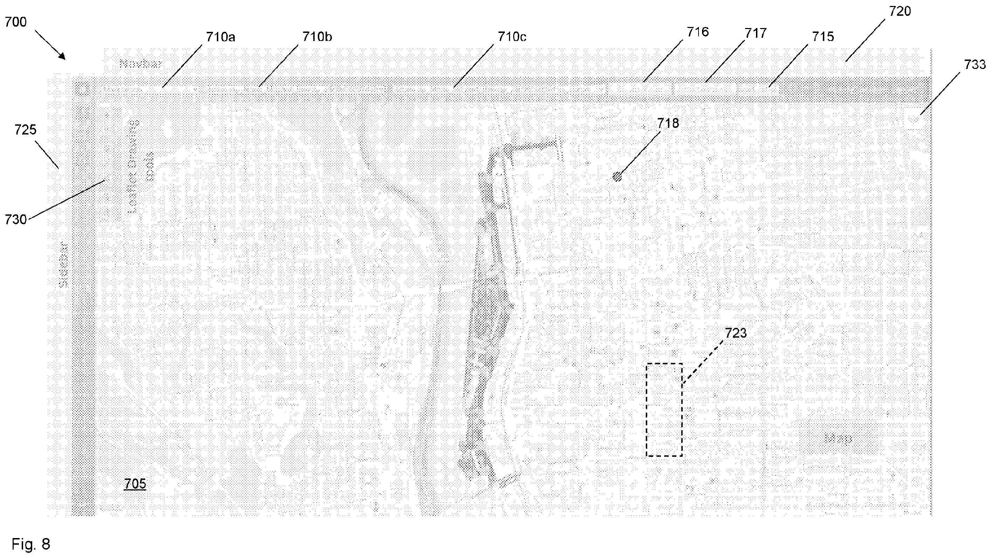

Referring to Fig. 8, an embodiment configured according to principles of the invention includes a secure program or application configured for executing in the cloud N. The application includes a dashboard or user interface 700 with which a user can locate and connect with a surveillance robot, such as but not limited to receiving audio-visual reports respecting a surrounding area and assuming control of functions of the robot. User interface 700 supports at least three important roles. First, a security manager role provides for establishing an operation area configuration for a robot, including detailing patrol routes, standing posts, schedules and headings, and any other relevant information that the robot will need to conduct patrols. Preferably, a security dispatcher monitors the robot as it patrols and transmits location updates.

A second role that user interface 700 supports is that of dispatcher, including monitoring robot location updates, alerts and camera feeds. User interface 700 provides dispatchers with limited control of some robot functionalities, such as: robot display lights, for example toggling red/blue flashing lights on the robot; robot speakers, such as playing a pre-defined set of sounds to alert and/or communicate with personnel near the robot via the speakers and microphones.

A third role that user interface 700 supports is that of fleet manager, which includes everything that a dispatcher can do, plus access to a go-to-point feature, described below, and robot configuration information such as autonomy mode, manual mode, remote control mode.

Dashboard 700 provides a variety of functions, including a map page 705. Map page 705 displays relevant information including: routes that robots are taking or could take; docking points where robots are or could be parked and/or recharged; alerts respecting events of interest; and locations where robots are or could be operating.

Map page 705 provides a navigation bar (navbar) 720 that includes one or more area controls 710a-c of increasing granularity for selecting a geography area of interest. For example, first control 710a might provide for limiting the area displayed to a country, state or city, and second control 710b might further limit the display to a state within a country, a county within a state, or quadrant within a city.

Map page 705 provides drawing tools 730, preferably open-source modules, such as Leaflet and Leaflet-Geoman, for drawing potential travel routes or patrols for a robot, such as patrol 723, altering the view, such as a magnification level applied to the map page 705, and other functions. For example, to draw a zone, as described below, the user must first select the Polygon tool. The user then selects a place on the map for a point of the polygon. To finish the polygon, the user may select the first point placed and close the shape. Preferably, the color of the border should change to indicate that the polygon was completed properly. Alternatively, the user may select a "Finish" button whereby the drawing processor will configure a line or lines to close the polygon automatically. Users may remove a last point drawn by selecting a "Remove Last Vertex" button in the ribbon menu. The user may cancel creating the polygon altogether by selecting a "Cancel" button.

The invention recognizes users having different roles or privileges, which roles would be assignable by a system manager. A user having a security manager role is responsible for at least drawing patrols, starting and ending patrols, drawing exclusion/inclusion zones, and whatever else may be needed for planning and starting a patrol. A user having a dispatcher role is responsible for overseeing a robot when a patrol is active, including monitoring robot physical locations and reviewing and managing alerts as aided by a live feed from the robot's audio, visual and other sensors. A user having a fleet manager role has all of the responsibilities of a dispatcher, and also has a privilege or authority to take over remote control of any robot.

Once a user logs in as a Security Manager and selects an Operation Area, map page 705 loads a currently active basemap of the Operation Area selected, and an active configuration of an Operation Area, if any, by default. A security manager user can select a basemap from dropdown control 710b located next to the Operation Area selection 710a. The options of the dropdown menu are populated based on the maps retrieved by the basemap-api. The basemap-api is a REStful API that is responsible for handing a list of basemaps and specific basemap data to the user. The user will then also be able to see a third dropdown menu 710c for choosing an Operation Area Configuration (OAC) map. When the OAC dropdown menu appears, it gets populated similarly to the basemap selection dropdown; it calls into an api to get a list of all available OAC maps for a given basemap.

When the security manager user selects an OAC map, the map will then populate with various features it contains. OAC map features are distinguished from the basemap features by elements in a color, preferably a lime green color. OAC map features preferably are of these main types:
1. A Standing Post, as represented by a marker pin;
2. A Patrol Route, as represented by a line;
3. A Zone, as represented by a polygon and having subtypes:
   a. Operation Area, defining operation area bounds;
   b. Restricted Zone, defining an area where a robot will emit detections or where the robot should not go, such as but not limited to: Parking Zone, No Parking Zone, No Person Zone, No Climbing Zone, No recumbent Zone, Motion Detection Zone, Vehicle Survey Zone, Robot Exclusion Zone.
   c. Route Adjusted Zone, defining an area not included in an Operation Area Configuration, but factored into automatic routing, depending on a cost factor.

Each feature, preferably, has an associated schedule, defined by the manager, for guiding a robot when and where to conduct certain actions.

Navbar 720 includes a start/end or "start patrol" button 715 for initiating a patrol of the area displayed, preferably according to patrol 723. According to principles of the invention, only a security manager user has authority to initiate patrols. However, fleet manager users may assume control of robots deployed on patrols.

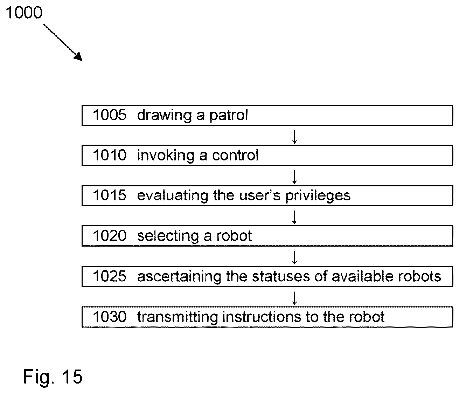

Referring also to Fig. 15, map page 705 provides nonexclusive context for describing an embodiment of a method of controlling a robot 1000 configured according to principles of the invention. Preferably, method 1000 includes a step 1005 of a user, having appropriate privileges, drawing patrol 723 desired for a robot. Once a patrol is drawn, method 1000 could continue with a step 1010 of the user selecting or invoking a control or start button 715. Preferably, start button 715 is not enabled and/or visible for other than a security manager user.

Preferably, step 1010 is accomplished via an application protocol interface API that is configured to receive a message created at step 1010 by invoking control 715. The message may include the user's identification and/or privilege status, and particulars respecting a patrol desired for execution. An appropriate message broker receives and parses message and distributes data pertaining to the user to a privilege manager.

Method 1000 then progresses to a step 1015 of evaluating the user's privileges. Step 1015 is intended to establish whether the user has any authority to instruct any robots, and if so, the extent or limit of that authority, that is, as to which robots the user may exercise control, with some robots and/or functions and features thereof requiring greater privileges than others.

Once the user's privileges are evaluated, method 1000 progresses to a step 1020 of selecting a robot for undertaking the route that is appropriate to the user's privileges. If multiple robots are available, then step 1020 includes a step 1025 of ascertaining the statuses of robots available for executing the patrol. The statuses of the robots range from and include, in order of preference: an idle state wherein a robot is powered up and activatable but at a charging station or simply at rest; an autonomous state wherein a robot is executing instructions, such as traversing a route; and a manually-operated state wherein a robot is controlled remotely by a human operator. Since a robot in the last state may be in a situation that requires human intervention, a robot in the last state would be the lowest preference. Since robots in autonomous mode, preferably, are permitted to complete their missions, absent an urgent need, robots in autonomous mode would have a higher preference than a robot in a manually-operated state. Thus, robots exhibiting an idle state are preferred for step 1015.

Once a preferred robot is selected for a patrol, method 1000 progresses to a step 1030 of transmitting instructions to the selected robot. Step 1030 may be accomplished via any communications convention appropriate for where a robot is or will be operating and the communications equipment available to the robot.

Once a user logs in as a dispatcher, map page 705, preferably, populates with:
1. Robot Markers configured for showing live location of all robots currently operating in the operation area. Hovering a cursor over robot markers initiates display of additional information about the particular robot, [such as?]
2. Robot Path History, preferably displayed as a grey trail behind robot for showing where the robot has been within an elapsed time, such as 2 minutes. Preferably, newer way points are shown darker and older ones shown lighter in color.
3. Alerts: Multiple alerts should be populated on the map page and clicking them should open them in the sidebar. When hovered over, additional information about the alert is displayed.

While a robot is executing a patrol, it will generate alerts when it detects, for example, a vehicle or a human. According to principles of the invention, part of a dispatcher user's role is to supervise the patrolling robot and notice, via the robot's sensors, what may not seem appropriate for the patrolled area. The alerts help the dispatcher to bring out specific details regarding what is detected in the form of popups on the map. Selecting the alert icon launches a sidebar for displaying detailed information about the alert.

To limit system or communications latencies and/or costs associated with high bandwidth messaging, rather than transmitting complete images or video feeds from a robot, the invention includes configuring the robot to (1) transmit meta data and/or image data respecting an alert, notification or update via fast, inexpensive messaging and, generally contemporaneously, (2) transmit the complete audio, visual or other sensor data respecting same. The speed of the first transmission affords a user nearly contemporaneous appraisal of sufficient information of a situation for deciding whether further investigation may be warranted. If so, then, by the time the user decides to investigate the details of the alert, the second transmission will have arrived so that the user is able to undertake the investigation.

Once a user logs in as a fleet manager, map page 705, preferably, populates with:
1. Robot Markers as described above
2. Robot Status Markers configured for displaying a state of each robot.
3. Robot Path History, as described above.
4. Alerts, as described above.

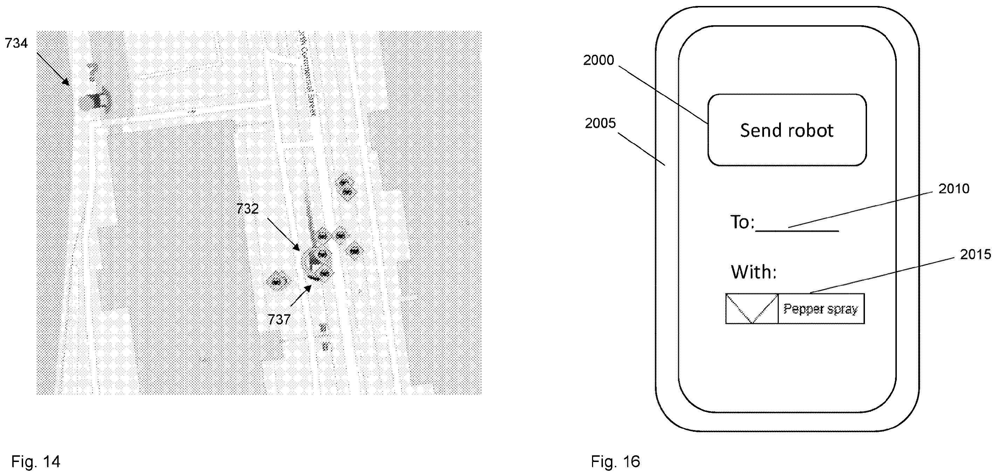

Referring to Fig. 14, one type of robot status marker includes circular icons that are configured for displaying, in multiple ways, a state of a robot. For example, when a robot is in autonomous state, it may be represented like icon 732 with a green full circle; both the color and the shape serve as indicators of the autonomous state. Similarly, when a robot is in a remote control state, it may be represented with a yellow semi-circle. When a robot is in a manually-operated or joy stick state, it may be represented like icon 734 with a red quarter circle.

Another robot status marker includes the use of a black front pointer that is configured to indicate that the robot is in motion and in a particular direction. If a robot is moving, a black pointer 737 will present on the perimeter of the circular marker associated with the robot. When the robot is stopped, no black pointer presents.

Referring again to Fig. 8, map page 705 provides a sidebar 725 that provides navigation links for navigating to different pages, such as an alerts page 735, a multibot view 790, and a patrol user interface 950, as described below.

Map page 705 provides a layer button 733 for identifying and/or assigning the visibility of or other properties that may be attributable to a layer. For example, a layer may be reserved for: a standing post, a patrol route, a zone, an operation, a zone, as described above.

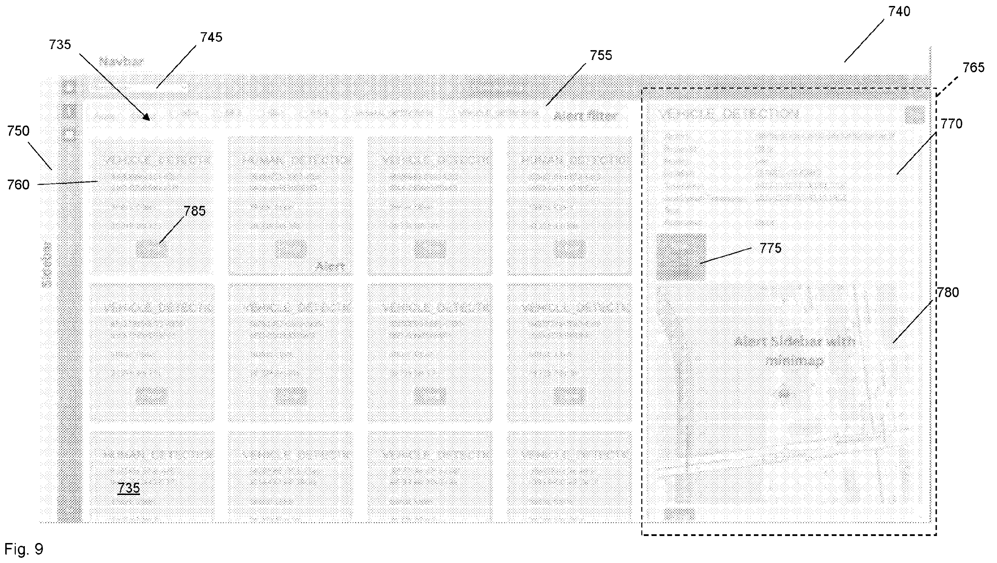

Referring to Fig. 9, dashboard 700 provides an alerts page 735 that is configured to display all alerts pertaining to all of the robots that are registered with the system, with the most recent alerts displayed first. Alerts page 735 allows for scrolling through, observing, filtering, resolving and investigating individual alerts. Like map page 705, alerts page 735 has a Navbar 740 on which is an area control 745 for selecting a geographic area of interest, and a close control for clearing the page of past alerts.

Alerts page 735 has a sidebar 750 that provides various links for navigating to different pages like alerts page 735, a live video page 790, map page 705 and a patrol user interface 950.

Alerts page 735 has an alert filter bar 755 that permits limiting alerts shown to, e.g. only those pertaining to a particular robot, detection type or alert status.

Preferably, when a user selects a particular alert for investigation, such as alert 760, an alert sidebar 765 launches that displays details of the alert 770, an embedded image 775 of the subject of the alert, such as a vehicle, and a minimap 780 showing the location where the alert was raised.

In addition or alternative to investigating an alert, an alert may be closed by selected the close control 785 associated with the alert desired for closure.

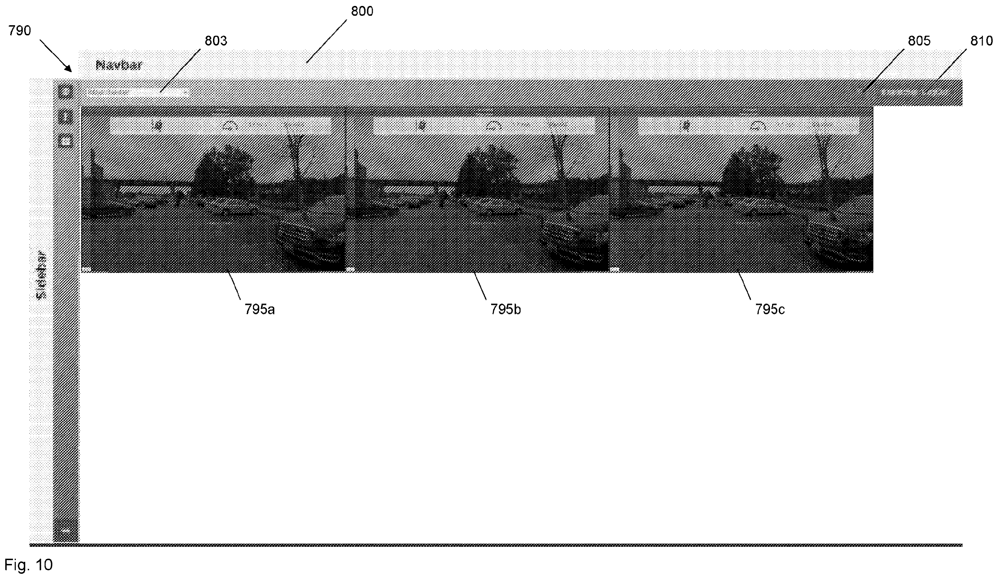

Referring to Fig. 10, dashboard 700 provides a live video page 790 that is configured to display a main video feeds 795a-c from different robots that are in service or operating in an Operation Area defined by the user. Only front camera views are displayed for the active robots along with their respective identification or ID, and the percentage of battery capacity remaining. Selecting any of main video feeds 795a-c will navigate or transfer control tosingle robot view or SRV page 850 for the robot of the feed 795 selected.

As with map page 705 and alerts page 735, live video page 790 includes a Navbar 800 that defines or contains the Operation Area selection 803 similar to area controls 710a-c on maps page 705. Navbar 800 has a help button 805 for initiating a help dialog or displaying information for aiding in the use of live video page 790. Navbar 800 has a log out button 810.

Live video page 790 has a sidebar 815 that provides links for navigating to different web pages like alerts page 735, multibot or live video page 790, map page 705 and Patrol UI 950.

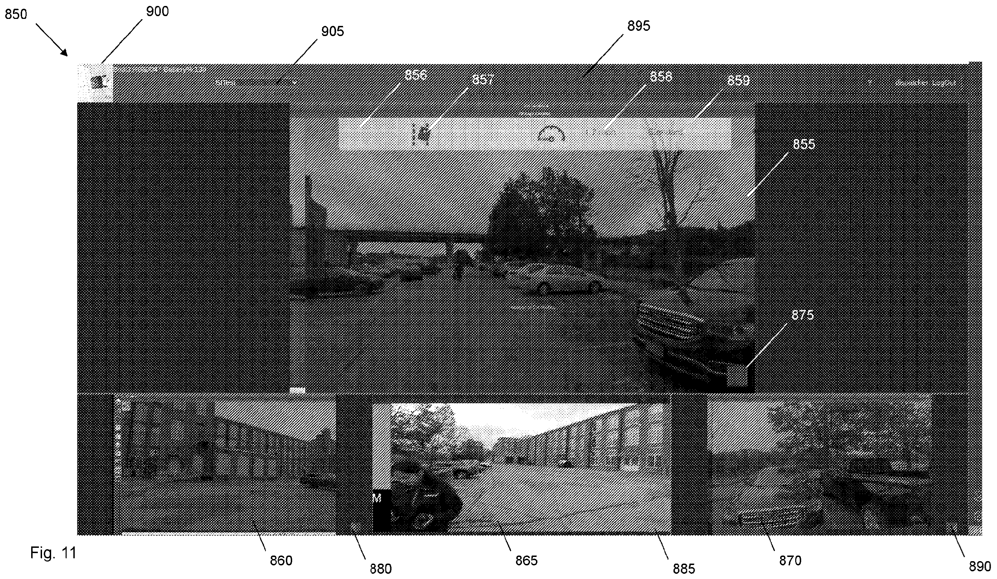

Referring to Fig. 11, dashboard 700 provides a single robot video (SRV) page 850, preferably, displays all available video feed from the selected robot, including from the front feed 855, left feed 860, right feed 865 and rear feed 870. Any of the minor views, left feed 860, right feed 865 and rear feed 870 as shown, may be promoted to the main view instead of, as shown front feed 855, by selecting the desired view. Each of views 855, 860, 865 and 870 display a small square or camera icon 875, 880, 885 and 890, respectively in the bottom right corner thereof that indicates the direction of the respective camera views.

Main view 855 includes a leaflet 856 including a position indicator 857, a speed indicator 858 and a mode indicator 859.

SRV page 850 includes a Navbar 895 that displays a minimap 900 showing the approximate location of the robot from which video feeds are shown on SRV page 850. Navbar 895 has an Operation Area selection control 905 that informs the user about a current operation area of the robot. Switching to a different operation area will discontinue the live feed from the robot if the robot is not assigned to that particular operation area. If the robot is assigned to the selected operation area, then the user will not notice any change in the live robot feed.

SRV page 850 includes a help button 851 and log out button 852 similar to help button 805 and log out button 810 of live video page 790.

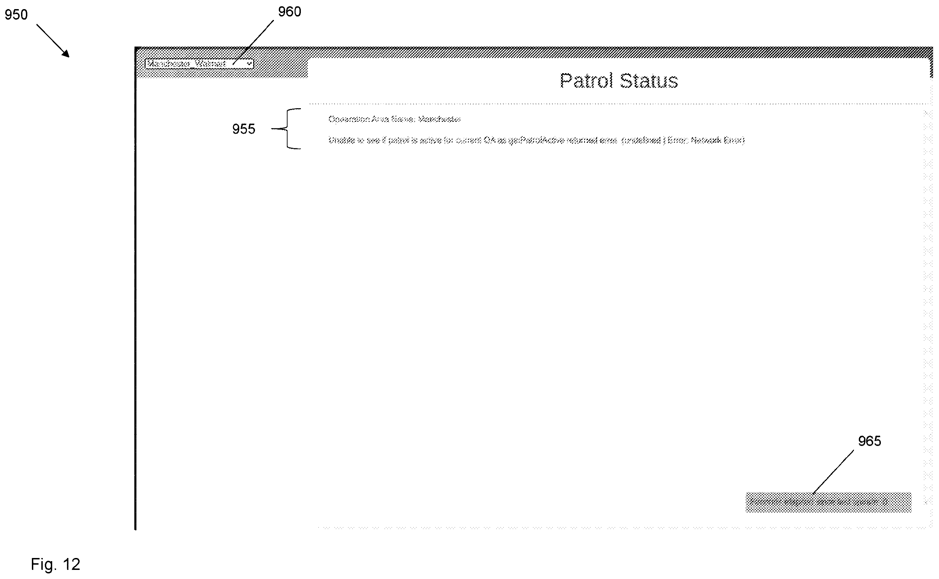

Referring to Fig. 12 dashboard 700 provides a Patrol Status UI 950 configured to provide live information 955 regarding a robot on ongoing patrol. Patrol Status UI 950 opens when the Start Patrol 715 button is selected on map page 705.

Patrol Status UI 950 has an Operation Area selection control 960 that, like control 905, informs the user about a current operation area of the robot and functions similarly.

Patrol Status UI 950 has a timer leaflet 965 that displays the amount of time that has elapsed since information 955 was last updated.

Preferably, a user logs into the dashboard 700, which at first displays map page 705, although potentially not populated pending selection of a geographical area of interest. Alternatively, dashboard 700 may access geolocation data respecting where the user is and populate the map based on these data.

Referring to Fig. 16, the invention includes availing others, specifically policing authorities, with the ability to reinforce field officers with robots are suitable and proximate to where they are needed. Preferably, a police officer in the field desirous of reinforcement issues a notice or call for a reinforcing robot, perhaps by selecting a control or button 2000 on a communication device 2005, such as a mobile phone. Preferably, the officer specifies where the robot is desired via a field 2010 that may be populated by selecting a point on a map of the local area. Preferably, the officer specifies any special function or capability that may be needed from the robot with a control 2015, such as a drop box.

After filling in the necessary fields and invoking control 2000, communication device 2005 transmits a message to the API described herein that is parsed and processed by the message broker as described above. In view of a variability of officer personnel and the relative permanence of a police station, which could be registered as a fleet manager user, the message from the officer may be relayed to the API via the police station.

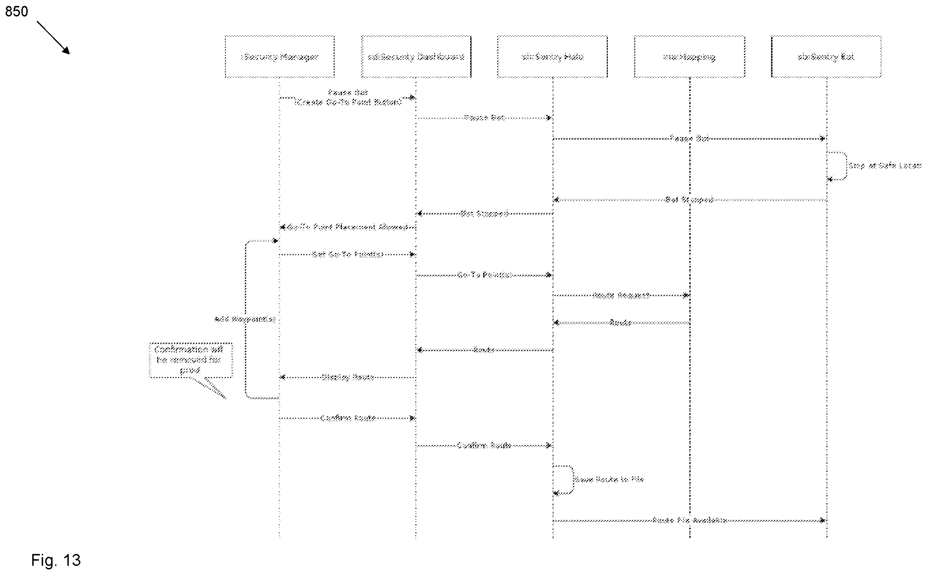

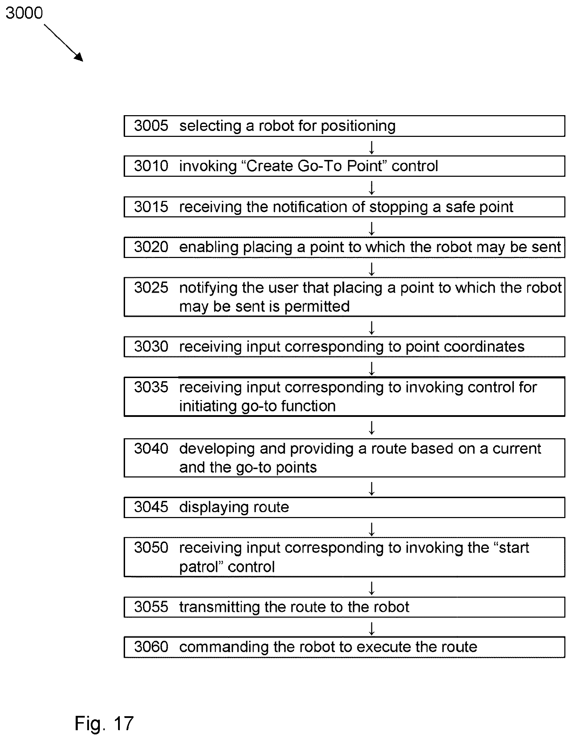

Referring to Figs. 1, 13 and 17, supportive or independent of the above, the invention includes a method 3000 for instructing a robot to go to a location. Method 3000 includes a step 3005 of a user having fleet manager or security dispatcher status, selecting a robot for positioning. Method 3000 resumes with a step 3010 of the user selecting or invoking a "Create Go-To Point" control or button 716 on map page 705 or a Security Dashboard (not shown). Step 3010 causes a step 3015 of dashboard 700 or security dashboard (not shown) sending a pause command to the robot selected at step 3005.

Responsive to the pause command, preferably, the robot aborts whatever route it may be executing, travels to and stops at a closest safe location, and transmits a notification that it is stopped at the safe location. Method 3000 continues with a step 3015 of dashboard 700 receiving the notification.

Step 3010 also enables a step 3020 of enabling placing a point to which the robot may be sent. Step 3020 may include a step 3025 of dashboard 700 notifying the user that placing a point 718 to which the robot may be sent is permitted. Preferably, the user is able to place point 718 while the robot executes the pause command.

Responsive to step 3020 or step 3025, the user may place a Go-To point 718 on map page 705 with drawing tools 730. Method 3000 continues with a step 3030 of receiving input corresponding to coordinates of point 718. Preferably, step 3030 enables and/or renders visible a previously-invisible "Go To Point" control or button 717 on map page 705.

After user selects or invokes "Go To Point" control 717, method 3000 resumes with a step 3035 of receiving input corresponding to invoking control 717 for initiating the go-to point function. Method 3000 progresses to a step 3040 of requesting from a mapping function a route from a current location of robot to Go-To point 718.

Method 3000 continues to step 3040 of the mapping function developing and providing to dashboard 700 a route based on the current and go-to points. Preferably, method 3000 progresses to a step 3045 of dashboard 700 displaying the route from the current location to the Go-To point 718. Preferably, the user may adjust the route and/or place additional go-to points as desired.

Once the user is satisfied with the route, the user may invoke, for example, the "start patrol" control 715 that operates to confirm same, and initiate preparing and transmitting instructions for the selected robot. Accordingly, method 3000 continues with a step 3050 of receiving input corresponding to invoking the "start patrol" control. Preferably, method 3000 includes a step 3055 of dashboard 700 transmitting the go-to route to the robot and a step 3060 of commanding the robot to execute the route.

While the principles of the invention have been described herein, the foregoing description is only an example and not a limitation on the scope of the invention. Other embodiments are contemplated within the scope of the present invention in addition to the exemplary embodiments shown and described herein. Modifications and substitutions by one of ordinary skill in the art are within the scope of the present invention. The invention is not limited to the particular embodiments described and depicted herein, rather only to the following claims.
The present application is a divisional application originating from EP 24717555.7.
EP 24717555.7 originates from PCT/US2024/021137. The original claims of PCT/US2024/021137 are presented as statements below so that the subject-matter of those 19 claims is includes in its entirety in the present applications.
Statement 1. Method of controlling of a robot comprising: evaluating whether a requestor has a privilege; and if said evaluating is true, then recognizing an authority of the requestor.
Statement 2. Method of statement 1 wherein said evaluating comprises determining whether the privilegecomprises authority to control the robot.
Statement 3. Method of statement 1 wherein said evaluating comprises determining whether the privilege is superior to another privilege.
Statement 4. Method of statement 1 further comprising ignoring an authority that is associated with only a lesser privilege.
Statement 5. Method of statement 1 further comprising publishing a message that is authorized by the requestor and configured for instructing the robot.
Statement 6. Method of statement 1 further comprising, if said evaluating is true, then notifying another of said recognizing.
Statement 7. Method of statement 1 further comprising second evaluating whether the has a second privilege that relates to an attribute of the robot.
Statement 8. Method of statement 7 wherein the attribute is selected from: a mobility capability; an operational capability; an instrument availability; and combinations thereof
Statement 9. Method of statement 7 further comprising, if said second evaluating is true, then recognizing a second authority of the requestor regarding the attribute.
Statement 10. Method of statement 1 further comprising, if said evaluating is false, then facilitating negotiating enabling said recognizing.
Statement 11. Method of statement 1 further comprising receiving a request from the requestor comprising responding to a selection from a graphical display.
Statement 12. Method of statement 11 wherein the selection is selected from: an icon; an image; a video; a window; a control; and combinations thereof.
Statement 13. Method of controlling a robot comprising:selecting a point and/or a route; and invoking a control, thereby enabling transmitting instructions to which a robot may respond by traveling to the point and/or along the route.
Statement 14. Method of statement 13 wherein said invoking comprises evaluating a privilege of a user.
Statement 15. Method of statement 13 further comprising transmitting instructions to which a robot may respond by traveling to the point and/or along the route.
Statement 16. Method of statement 13 further comprising commanding the robot to perform according to the instructions.
Statement 17. Method of statement 13 further comprising second selecting the robot.
Statement 18. Method of statement 17 wherein said second selecting comprises determining a state of each of a plurality of robots.
Statement 19. Method of statement 18 wherein the state is selected from: autonomous, manually-controlled, idle and combinations thereof.

## Claims

1. Method of controlling a robot (100, 200, 1000) comprising: selecting a point (718) and/or a route (723); and invoking a control (715, 716, 717), thereby enabling transmitting instructions to which a robot (100, 200, 1000) may respond by traveling to the point (718) and/or along the route (723).

2. Method of claim 1, wherein said invoking comprises evaluating a privilege of a user (1015.

3. Method of claim 1 or claim 2, further comprising transmitting (3055, 2060) instructions to which a robot (100, 200, 1000) may respond by traveling to the point (718) and/or along the route (723).

4. Method of any preceding claim, further comprising commanding the robot (100, 200, 1000) to perform according to the instructions.

5. Method of claim any preceding claim, further comprising second selecting the robot (100, 200, 1000).

6. Method of claim 5, wherein said second selecting comprises determining (1025) a state of each of a plurality of robots.

7. Method of claim 6, wherein the state is selected from: autonomous (732), manually-controlled (734), idle and combinations thereof.
